# EUROPEAN PATENT APPLICATION

(11) **EP 4 632 359 A1**
(43) Date of publication of application: **15.10.2025**
(21) Application number: 25169682.9
(22) Date of filing: 10.04.2025
(51) Int. Cl.: G01N 21/88, G01N 21/952

(54) **METHOD FOR PERFORMING AN OPTICAL ANALYSIS OF AN AEROSOL-GENERATING SEGMENT**

(30) Priority: 11.04.2024 IT 202400008182
(71) Applicant: G.D S.p.A., 40133 Bologna (IT)
(72) Inventor: SOLAROLI, Matteo, Imola (BO) (IT)
(74) Representative: Bianciardi, Ezio

(57) **Abstract**

A method for performing an optical analysis on an aerosol-generating segment (100a) comprises a step of providing a smoking segment (100a) comprising a metallic or metallized insert (101) having at least one portion (L) which is exposed to view and a step of providing an electromagnetic radiation emitter (200). The method further comprises a step of providing a polarizing filter (300) configured for selectively filtering the electromagnetic radiation emitted by the emitter (200) based on a specific oscillation direction and a step of directing the radiation emitted by the emitter (200) towards at least one portion of the segment (100a) having the exposed portion (L) to strike it with polarized radiation. The method further comprises a step of detecting the electromagnetic radiation reflected by the exposed portion (L) and a step of generating an image of the portion of the segment (100a) based on the detected electromagnetic radiation to obtain at least one qualitative and/or positional information about the insert (101), in particular about the exposed portion (L) of the insert (101).

## Description

The present invention relates to a method for performing an optical analysis on an aerosol-generating segment.

As is known, in the production of smoking articles it is particularly important for the article to conform with a required standard.

Thus, in this situation, the need is particularly felt to inspect the article, e.g., by measuring some of the components thereof, in order to evaluate the conformity thereof.

In order to inspect the articles or sub-portions thereof, such as the aerosol-generating segments, a system is known from EP4078158 comprising a light emitter, configured for lighting the article to be inspected, and a polarized camera (i.e., a camera capable of simultaneously capturing four series of images per frame) configured for detecting the electromagnetic radiations reflected by the article.

What is obtained from the above detection is an image on a gray scale of the article generated based on the electromagnetic radiation detected, i.e., based on the electromagnetic radiation reflected by the different components of the article.

In fact, it is known that smoking articles can have different components, such as metallic or metallized laminae, paper or tobacco filling materials etc., which, being made of different materials, reflect the electromagnetic radiation differently.

In other words, each component of the article, which is lit with the electromagnetic radiation, reflects the latter, diverting and altering it differently. Said reflected electromagnetic radiation is detected by the polarized camera and, based on said capture, the image of the article is generated on a gray scale.

Disadvantageously, if the article comprises metallic and/or metallized components (for example, induction heating laminae), or if the article comprises light-colored components (for example filler paper), the image obtained has undesired reflections and a weak contrast, which does not allow identifying and distinguishing the different components of the article. In this situation, the image of the article has a prevalence of intermediate tones and it is not possible to take precise and reliable measures of the dimensions of the components and/or detect the orientation of the components.

Furthermore, if a component of the article, such as a heating lamina, is arranged substantially parallel to the light source and to the camera, or if a wall thereof is detected which is not perpendicular to the lighting direction, it is difficult to detect accurately, risking to create a fake image. In particular, in such a situation it is difficult to discern between the front wall and the side wall of the component.

Therefore, the technical task of the present invention is to provide a method for performing an optical analysis on an aerosol-generating segment and a system for making smoking articles which are capable of overcoming the drawbacks of the prior art.

Therefore, it is the object of the present invention to provide a method for performing an optical analysis on an aerosol-generating segment which allows performing a precise and accurate analysis.

It is a further object of the present invention to provide a method for performing an optical analysis on an aerosol-generating segment which allows effectively identifying components with non-planar extension.

The specified technical task and objects are substantially reached by a method for performing an optical analysis on an aerosol-generating segment and a system for making smoking articles comprising the technical features as set out in one or more of the appended claims.

In particular, the specified technical task and objects are substantially reached by a method for performing an optical analysis on an aerosol-generating segment, in particular forming part or intended to form part of a smoking article comprising a step of providing an aerosol-generating segment comprising a metallic or metallized insert having at least one portion which is exposed to view. The method further comprises a step of providing an electromagnetic radiation emitter and a step of providing a polarizing filter configured for selectively filtering the electromagnetic radiation emitted by the emitter based on a specific oscillation direction.

The Applicant has found that by adopting a step of polarizing the radiation emitted, it is possible to increase, far more effectively, the contrast of the image detected, in particular by using a polarized sensor (camera). The Applicant has noted that by using a source of polarized radiation it is possible to identify, in an improved manner, inserts or parts of the article having a three-dimensional development, clearly allowing the detection, and with defined edges, of those lit portions, which are arranged with a specific orientation with respect to the incident polarized radiation (for example so as to distinguish a front surface of the insert from side portions of the insert or for detecting cavities or ridges with respect to a smooth surface).

The method further comprises a step of directing the radiation emitted by the emitter towards at least one portion of the segment having the exposed portion of the insert so that the portion of the segment is struck by polarized radiation.

Preferably, the step of directing the radiation towards the aerosol-generating segment is operated by directing the radiation towards an end surface of the aerosol-generating segment, preferably along a direction parallel to the extension axis of the segment or on average parallel thereto (in the case of an annular source, the conical beam is converging in a direction parallel to the extension axis of the segment).

The method further comprises a step of detecting, via a detector, the electromagnetic radiation reflected by the portion of the segment, and in particular, by the exposed portion of the insert. The method further comprises a step of generating an image of said portion of the segment, and in particular of the exposed portion of the insert, based on detected electromagnetic radiation.

In accordance with a possible embodiment, the emitter is disposed coaxially with respect to the detector.

In such a situation, the emitter is interposed between the detector and the segment and the emitter has an annular structure so that the electromagnetic radiation reflected by the segment reaches the detector passing through an empty space region within the annular shape of the emitter.

In accordance with a further possible embodiment, the emitter and the detector have different axes, defining different angles to one another with respect to the outer surface of the segment.

Preferably, the detector is a polarized detector and/or it comprises a sensor, which is polarized concordantly with the polarizing filter so as to detect the polarized component of the electromagnetic radiation emitted by the emitter and reflected unchanged by the segment.

Preferably, the radiation is visible radiation and the detector comprises a camera.

The method further comprises a step of obtaining at least one qualitative and/or positional information about the exposed portion of the insert. Preferably, the step of obtaining at least one qualitative and/or positional information about the exposed portion of the insert is accomplished by processing the image with a graphical processing software program. Preferably, the step of obtaining at least one qualitative and/or positional information about the exposed portion of the insert comprises a step of determining the boundary at least of the exposed portion of the insert, in particular through a contrast recognition algorithm.

Preferably, the insert is a heating lamina inserted inside the aerosol-generating segment and extending substantially parallel to an extension axis of the segment.

Preferably, when the insert is a heating lamina inserted inside the aerosol-generating segment, the determined boundary is the boundary of a front surface of the lamina facing the detector.

Preferably, the aerosol-generating segment comprises a cellulose-based filling material.

Alternatively, the aerosol-generating segment comprises a reconstituted tobacco-based filling material.

Further features and advantages of the present invention will become more apparent from the following indicative and thus non-limiting description of an embodiment of a method for performing an optical analysis on a smoking article.

Such a description will be set out below with reference to the accompanying drawings, provided for indicative and thus non-limiting purposes only, in which:
- Figures 1A and 1B show a schematic view of a possible arrangement of elements for the execution of the method according to the invention and an enlargement of a portion of a smoking article, respectively;
- Figures 2A and 2B show an image of an end surface of an aerosol-generating segment of the smoking article captured by the method of the present invention and by a known method, respectively;
- Figure 3 shows a possible embodiment for operating the method according to the invention.

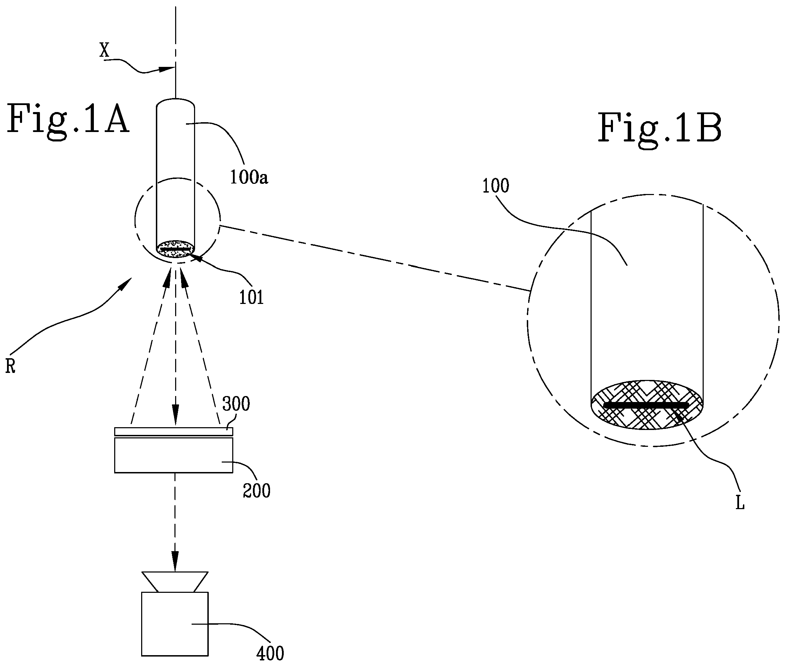

The method of the present invention comprises a step of providing an aerosol-generating segment 100a comprising a metallic or metallized insert 101 having at least one portion "L" which is exposed to view (Figure 1B). Said portion "L" which is exposed to view is preferably an end portion, for example obtained by cutting or shearing a component of multiple or infinite length.

In accordance with a preferred embodiment, the aerosol-generating segment 100a comprises: an external tubular (preferably cylindrical) wrapper; a filler arranged inside the tubular wrapper; the metallic or metallized insert 101 arranged inside the filler.

The segment 100a has a cylindrical shape and comprises two opposite ends. The metallic or metallized insert 101 can have the portion "L" exposed at only one end (as shown in Figures 1A and 1B) or at both ends of the segment 100a.

The segment 100a can be coupled to other segments to form a smoking article 100 (in this case, the metallic or metallized insert 101 is preferably exposed at only one of the ends of the segment 100a as illustrated in Figures 1A and 1B) or not (in this case the metallic or metallized insert 101 is preferably exposed at both ends of the segment 100a). The term "coupled" means that the segment 100a is arranged adjacent to another segment and possibly connected to said other segment.

The method further comprises a step of providing an electromagnetic radiation emitter 200 and a step of providing a polarizing filter 300 configured for selectively filtering the electromagnetic radiation emitted by the emitter 200 based on a specific oscillation direction.

In such a situation, the polarizing filter 300 allows only the electromagnetic radiation having a predetermined oscillation direction to pass through the same polarizing filter 300, while it prevents this passage of the electromagnetic radiation having a different oscillation direction with respect to that of the predetermined direction. By so doing, after crossing the polarizing filter 300, the electromagnetic radiation is polarized.

Preferably, the radiation is visible radiation.

Alternatively, the radiation can be a radiation having a wavelength outside the field of visible radiation.

The method further comprises a step of directing the radiation emitted by the emitter 200 towards at least one portion of the segment 100a having the exposed portion "L" of the insert 101 so that the portion of the segment 100a is struck by polarized radiation (Figure 1A). In other words, the radiation emitted by the emitter will be intended to strike at least the exposed portion "L" of the insert 101; preferably, the radiation emitted by the emitter will be intended to strike the exposed portion "L" of the insert 101 and the end section of the segment 100a.

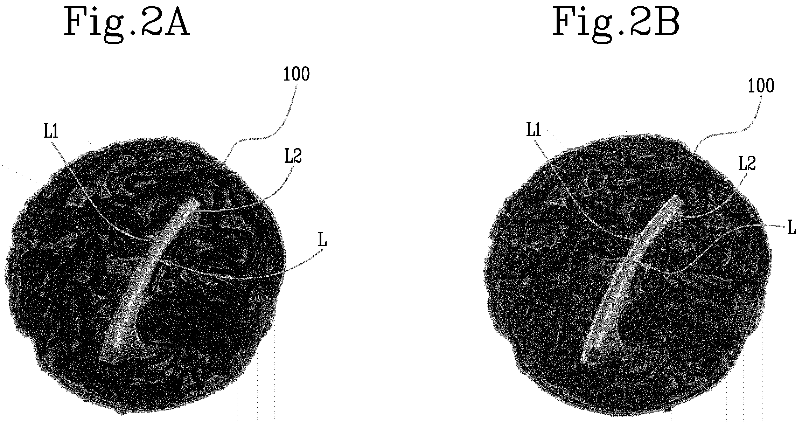

In accordance with a possible embodiment (shown in Figures 1A, 2A and 2B), the aerosol-generating segment 100a can be filled with a cellulose-based material. Alternatively, such an aerosol-generating segment 100a can be filled with a reconstituted tobacco-based material. In other words, the filler of the segment 100a can be a cellulose-based or reconstituted tobacco-based material or a combination thereof.

Still with reference to the aforesaid embodiment, the insert 101 is preferably a lamina intended to heat the segment 100a by induction (in particular, the filler of the aerosol-generating segment 100a). Preferably, the insert 101 has a longitudinal extension and extends substantially parallel to an extension axis "X" of the segment 100a.

With particular reference to Figure 1B, considering the end face of the segment 100a, the insert 101 has a termination disposed substantially flush with the face of the segment 100a and visible from the outside. Such a termination is for example obtained by cutting a continuous rod containing a continuous lamina of metallic or metallized material.

In such a situation, the step of directing the radiation towards the segment 100a is operated by directing the radiation towards an end surface of the aerosol-generating segment 100a, i.e., towards the surface shown in Figure 1B.

Preferably, the radiation is directed along a direction parallel to the extension axis "X" of the aerosol-generating segment 100a (Figure 1A). The method further comprises a step of detecting, by means of a detector 400, the electromagnetic radiation reflected by the portion of the segment 100a having the exposed portion L of the insert 101.

In particular, the electromagnetic radiation reflected by the exposed portion "L" by the insert 101 is detected.

Preferably, the detector 400 is a polarized detector and/or comprises a polarized sensor in accordance with a polarization direction.

More preferably, such a polarization direction is concordant with the polarizing filter 300 to detect the polarized component of the electromagnetic radiation emitted by the emitter 200 and reflected unalterably by the article 100, and in particular by the exposed portion "L" of the insert 101.

In other words, the detector 400 is capable of detecting the polarized electromagnetic radiation emitted by the emitter 200 and reflected, without alteration of the polarization, by the aerosol-generating segment 100a.

It should be noted that some materials, for example metallic or metallized ones, as the insert 101, reflect radiation striking them with an angle equal to about 90°, without diffusing it; in other words, said materials do not alter the polarization of the radiation normal to the surface of the material itself and are particularly suitable to be detected with a method according to the invention, since the radiation striking them is mainly or entirely reflected from them and free from alteration of the polarization. In contrast, other materials such as cellulose and/or tobacco-based materials such as the filler of the segment 100a, tend to diffuse radiation and/or alter the polarization thereof. Consequently, the method of the present invention allows obtaining an excellent contrast both between the insert 101 and the adjacent material, and among different portions of the same insert (and in particular between the front surface and the side surface).

In case of visible radiation, the detector 400 comprises a camera 400, in particular a polarized camera.

In accordance with the embodiment shown in Figure 1A, the emitter 200 is disposed coaxially with respect to the detector 400.

Still with reference to the embodiment of Figure 1A, the emitter 200 is interposed between the detector 400 and the aerosol-generating segment 100a. In such a situation, the emitter 200 preferably has an annular structure so that the electromagnetic radiation reflected by the segment 100a reaches the detector 400 passing through an empty space region within the annular shape of the emitter 200.

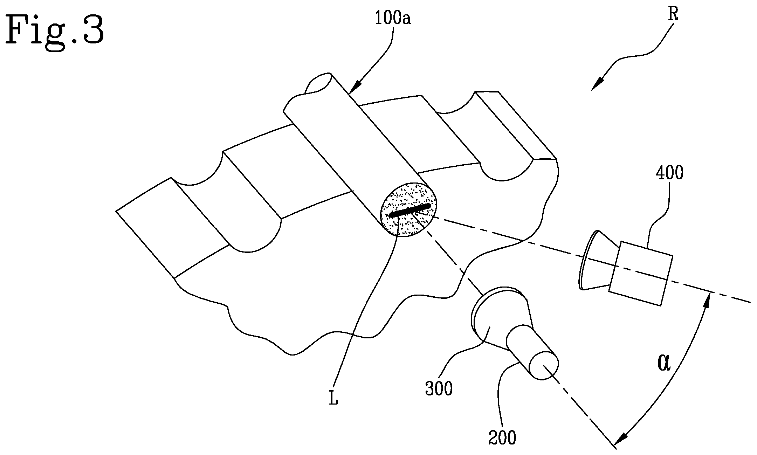

Alternatively, the emitter 200 and the detector 400 could have different axes defining different angles with respect to the outer surface (face) of the segment 100a. For example, the emitter 200 emits radiation along a direction parallel to the extension axis "X" of the segment 100a and the detector 400 has an axis which is inclined with respect to this axis "X" (see Figure 3, where the article 100 is supported by a drum), for example of an angle "α" between 30° and 60°.

Following detection by the detector 400, the method comprises a step of generating an image of the portion of the segment 100a, and in particular of the exposed portion "L" of the insert 101, based on the detected electromagnetic (reflected) radiation.

Subsequently, the method comprises a step of obtaining at least one qualitative and/or positional information about the insert 101, in particular about the exposed portion "L" of the insert 101.

Preferably, the step of obtaining at least one qualitative and/or positional information about the insert 101, in particular about the exposed portion "L" of the insert 101, is accomplished by processing the image with a graphical processing software program.

In particular, in the preferred and illustrated embodiment, the exposed portion "L" of the insert 101 is a front surface "L1" of the heating lamina inserted inside the aerosol-generating segment 100a.

Preferably, obtaining the qualitative and/or positional information of the exposed portion "L" of the insert 101 comprises a step of determining the boundary of at least the exposed portion "L" of the insert 101.

In the preferred embodiment, the determined boundary is the boundary of the front surface "L1" of the lamina facing the detector 400.

Determining the boundary is preferably obtained by means of a contrast recognition algorithm. In such a situation, by virtue of the marked contrast present between the exposed portion "L" of the insert 101 and the rest of the portion of the segment 100a, it is possible to clearly distinguish such an exposed portion "L" of the insert 101 and obtain all the desired qualitative and/or positional information. In other words, by virtue of the marked contrast between the exposed portion "L" of the insert 101 and the filler of the segment 100a, it is possible to identify the insert 101 and obtain all the desired qualitative and/or positional information thereabout. With reference to Figure 2B, the image of the end face of the segment 100a obtained by the method of the present invention is shown. By virtue of the use of the polarizing filter 300, the insert 101 is well identifiable by virtue of the marked contrast between it and the filler of the segment 100a. In particular, with reference to Figure 2B, the actual cross-section of the insert 101 has been indicated with the reference "L1" and the side surface of the insert 101 with the reference "L2". In particular, by virtue of the marked contrast between the front surface "L1" of the insert 101 and the rest of the segment 100a (i.e., the filler and the side surface "L2" of the insert 101 itself) it is possible to determine qualitative information on the insert (such as whether it is curved or broken) and/or positional information (such as whether it is arranged centrally in the segment 100a, whether it is flexed, whether it is arranged exactly longitudinally).

Therefore, in use, at least one portion of the aerosol-generating segment 100a having the exposed portion "L" of the insert 101 is struck by a polarized electromagnetic radiation by virtue of the polarizing filter 300. In such a situation, such a struck portion of the segment 100a reflects the incident electromagnetic radiation. The portion of the segment 100a having the exposed portion "L" of the insert 101 reflects the incident electromagnetic radiation either without altering (spreading and/or varying the polarization angle) the latter or while altering it (spreading and/or varying the polarization angle). The detector 400 (preferably polarized) will detect the electromagnetic radiation reflected by the portion of the segment 100a.

Since the segment 100a comprises components, such as the insert 101 and the filler, made of different materials and, therefore, reflecting the polarized light of the emitter 200 in a different manner, it is possible to obtain an image (usually in a gray scale) representative of the polarization of each component, i.e., representative of the capacity, or not, of each component to reflect the electromagnetic radiation unalterably emitted by the emitter 200.

With reference to Figure 2A, the image of the end face of the segment 100a obtained by the known detection system described in the preamble is shown. In particular, with reference to Figure 2a, the actual cross-section of the insert 101 has been indicated with the reference "L1" and the side surface of the insert 101 with the reference "L2". In particular, it should be noted that the contrast between the front surface "L1" of the insert 101 and the rest of the segment 100a (i.e., the filler and the side surface "L2" of the insert 101 itself) is low; this makes it difficult (if not impossible) to determine qualitative and/or positional information about the insert.

With particular reference to Figure 2B, it should be noted that some components of the aerosol-generating segment 100a are darker than others. This is given by the capacity or incapacity of each component to reflect the incident electromagnetic radiation emitted unalterably by the emitter 200.

In particular, in Figure 2B in which there is an aerosol-generating segment 100a having a filler and in which the insert 101 is a heating lamina inserted inside the filler, it should be noted that the heating blade lamina has a lighter color with respect to the filler.

Again, with reference by way of non-limiting example to Figures 2A and 2B, Figure 2A shows generated based on an electromagnetic radiation detected by a polarized detector. In the case of Figure 2A, the aerosol-generating segment 100a has been struck with radiation emitted by an emitter 200, the polarizing filter 300 being absent. By so doing, the incident electromagnetic radiation on the article 100 has different oscillation directions.

As shown in Figure 2A, the image obtained does not have a good contrast between the insert 101 defined by the heating lamina and the filler of the aerosol-generating segment 100a. Furthermore, it is even more complicated to identify the front surface "L1" of the lamina with respect to the side surface "L2" thereof.

Thus, the image of Figure 2A does not allow obtaining a correct and precise qualitative and/or positional information of the heating lamina, as it is not possible to exactly distinguish the front surface "L1" thereof from the side surface "L2" thereof.

Whereas, with reference to Figure 2B, the segment has been struck by a radiation emitted by an emitter 200 in the presence of the polarizing filter 300 in accordance with the present invention. By so doing, the incident electromagnetic radiation on the aerosol-generating segment 100a has a single oscillation direction. In such a situation, the front surface "L1" of the insert 101, i.e., the heating lamina, is clearly identifiable and distinguishable from the side surface "L2" thereof, allowing obtaining a precise and reliable qualitative and/or positional information.

For the purposes of operating the method according to the invention, a special detection station "R" (for example of the type shown in Figure 1A or in Figure 3) is arranged in a machine known in the tobacco industry (for example, a filter tipping machine or a combining machine) in which each segment 100a or article 100 is supported (possibly cantilevered) and conveyed by a respective conveyor drum.

The detection station "R" can be positioned at any point along the conveying flow from the segments 100a or articles 100, in a suitable position for detecting one end of the segments 100a.

Alternatively, the detection station "R" can be positioned so as to perform the detection on a so-called "bundle" of articles 100, i.e., when the articles 100 are grouped together, for example, to be inserted into a package, or while the articles 100 are transferred in groups by means of transfer trays or bulk flows.

The present invention achieves the intended objects by eliminating the drawbacks of the prior art.

In particular, by virtue of the use of the polarized filter, in particular in combination with the polarized detector, it is possible to obtain an image of an aerosol-generating segment 100a in which a metallic or metallized insert 101 is clearly recognizable and such as to allow obtaining a qualitative and/or positional information of the insert 101 itself, so as to establish whether the segment 100a and/or the article 100 in which it is inserted conforms or not to the desired condition.

## Claims

1. A method for performing an optical analysis on an aerosol-generating segment (100a), in particular forming part of, or intended to form part of, a smoking article (100), comprising the following steps:
- providing an aerosol-generating segment (100a) comprising a metallic or metallized insert (101) having at least one portion (L) which is exposed to view;
- providing an electromagnetic radiation emitter (200);
- providing a polarizing filter (300) configured for selectively filtering the electromagnetic radiation emitted by the emitter (200) based on a specific oscillation direction;
- directing the radiation emitted by the emitter (200) towards at least one portion of the segment (100a) having said exposed portion (L) of the insert (101) so that said portion of the segment (100a) is struck by polarized radiation;
- via a detector (400), detecting the electromagnetic radiation reflected by said portion of the segment (100a), and in particular, by the exposed portion (L) of the insert (101);
- generating an image of said portion of the segment (100a), and in particular, of the exposed portion (L) of the insert (101), based on said detected electromagnetic radiation;
obtaining at least one qualitative and/or positional information about the insert (101), in particular, about the exposed portion (L) of the insert (101).

2. The method according to claim 1, wherein said insert (101) is a lamina inserted in the segment (100a) and extending substantially parallel to an axis of extension (X) of said segment (100a).

3. The method according to claim 2, wherein the step of directing the radiation towards the aerosol-generating segment (100a) is carried out by directing the radiation towards an end face of said aerosol-generating segment (100a), preferably along a direction parallel to the axis of extension (X) of the segment (100a).

4. The method according to any one of the preceding claims, wherein said emitter (200) is disposed coaxially with said detector (400).

5. The method according to claim 4, wherein said emitter (200) is interposed between said detector (400) and said segment (100a) and wherein said emitter (200) has an annular structure so that the electromagnetic radiation reflected by the segment (100a) reaches said detector (400) by way of an empty space region within the annular shape of the emitter (200).

6. The method according to any one of claims 1 to 3, wherein said emitter (200) and said detector (400) have different axes which make different angles with the outside surface of the segment (100a).

7. The method according to any one of the preceding claims, wherein said step of obtaining at least one item of qualitative and/or positional information about the exposed portion (L) of the insert (101) is accomplished by processing said image with a graphical processing software program.

8. The method according to any one of the preceding claims, wherein said step of obtaining at least one item of qualitative and/or positional information about the exposed portion (L) of the insert (101) comprises a step of determining the boundary at least of said exposed portion (L) of the insert (101), in particular, through a contrast recognition algorithm.

9. The method according to claim 7 or 8, when they depend on claim 3, wherein the boundary determined is the boundary of a front surface (L1) of said lamina facing towards said detector (400).

10. The method according to any one of the preceding claims, wherein said detector (400) is a polarized detector and/or comprises a sensor which is polarized concordantly with said polarizing filter (300) so as to detect the polarized component of the electromagnetic radiation emitted by the emitter (200) and reflected unalterably by the segment (100a).

11. The method according to any one of the preceding claims, wherein said radiation is visible radiation and wherein said detector (400) comprises a camera.

12. The method according to claim 2, wherein said aerosol-generating segment (100a) comprises a cellulose-based filling material.

13. The method according to claim 2, wherein said aerosol-generating segment (100a) comprises a reconstituted tobacco-based filling material.
